# EUROPEAN PATENT APPLICATION

(11) **EP 4 219 274 A1**
(43) Date of publication of application: **02.08.2023**
(21) Application number: 23154027.9
(22) Date of filing: 30.01.2023
(51) Int. Cl.: B62D 33/027, B62D 33/033

(54) **TAILGATE DEVICE WITH FOLDING FEATURE AND RELATED METHODS**

(30) Priority: 31.01.2022 US 202263304737 P; 18.08.2022 US 202217820592
(71) Applicant: Vanduzer, Shirley A., Neptune Beach, Florida 32266 (US)
(72) Inventor: Vanduzer, Shirley A., Neptune Beach, Florida 32266 (US)
(74) Representative: Sach, Greg Robert

(57) **Abstract**

A tailgate device includes a first panel defining first openings, and a second panel defining second openings. The tailgate device also includes a hinge coupled between first ends of the first and second panels and permitting the first and second panels to switch between an extended state and a folded state, and a sleeve receiving uppermost portions of the first ends of the first and second panels and aligned with the hinge to lock the first and second panels in the extended state. The tailgate device also includes a first retention device coupled to a second end of the first panel and to be coupled to a first side portion of a truck bed of a vehicle, and a second retention device coupled to a second end of the second panel and to be coupled to a second side portion of the truck bed of the vehicle.

## Description

### Related Application

This application is based upon prior filed copending Application No. 63/304,737 filed January 31, 2022, the entire subject matter of which is incorporated herein by reference in its entirety.

### Technical Field

The present disclosure relates to the field of vehicle accessories, and, more particularly, to a tailgate device and related methods.

### Background

Trucks are the most popular vehicle type sold in the United States. Because of the popularity of trucks, the truck accessory industry is quite mature and varied. One functional aspect of trucks that receives enhanced attention is the truck bed. Given the flexible nature of the truck bed, many accessories are available.

For example, the truck bed camper is a well-known accessory. The truck bed camper is intended to fit into the truck bed for transit to a remote campsite. Typically, the truck bed camper may require the removal of the tailgate, which is left behind. Once at the campsite, the user may remove the truck bed camper. Of course, the truck bed can now be used, but without the tailgate, the truck bed has limited functionality.

### Summary

Generally, a tailgate device is for a vehicle. The tailgate device comprises a first panel defining a plurality of first openings therein and having first and second ends, and a second panel defining a plurality of second openings therein and having first and second ends. The tailgate device also includes a hinge coupled between the first ends of the first and second panels and permitting the first and second panels to switch between an extended state and a folded state, and a sleeve receiving uppermost portions of the first ends of the first and second panels and aligned with the hinge to lock the first and second panels in the extended state. The tailgate device also includes a first retention device coupled to the second end of the first panel and to be coupled to a first side portion of a truck bed of the vehicle, and a second retention device coupled to the second end of the second panel and to be coupled to a second side portion of the truck bed of the vehicle. In particular, the sleeve may comprise first and second arms extending vertically to abut the first ends of the first and second panels, and a medial portion between the first and second arms and on the uppermost portions of the first ends of the first and second panels.

In some embodiments, each of the first and second retention devices may comprise a plurality of dowels to be received by the first and second side portions of the truck bed of the vehicle. Each dowel may comprise an elongate member configured to extend outward and away from the second ends of the first and second panels and retract inward, and an elastic member coupled to the elongate member and to bias the elongate member to extend outward.

In other embodiments, each of the first and second retention devices may comprise a magnetic device configured to magnetically couple to the first and second side portions of the truck bed of the vehicle. In yet other embodiments, each of the first and second retention devices may comprise a retention arm extending vertically, and a slot coupled to the first and second side portions of the truck bed of the vehicle, the retention arm to be slidingly engaged with the slot when in the extended state.

Also, each of the plurality of first openings may comprise a longitudinal slot, and each of the plurality of second openings may comprise a longitudinal slot. Each longitudinal slot may comprise parallel first and second sides, and curved first and second ends between the first and second sides. For example, each of the first and second panels may comprise a polymer plastic material.

Another aspect is directed to a method for making a tailgate device for a vehicle. The method comprises forming a first panel defining a plurality of first openings therein and having first and second ends, and forming a second panel defining a plurality of second openings therein and having first and second ends. The method further includes coupling a hinge between the first ends of the first and second panels and permitting the first and second panels to switch between an extended state and a folded state, and providing a sleeve to receive uppermost portions of the first ends of the first and second panels and to be aligned with the hinge to lock the first and second panels in the extended state. The method includes coupling a first retention device to the second end of the first panel and to be coupled to a first side portion of a truck bed of the vehicle, and coupling a second retention device to the second end of the second panel and to be coupled to a second side portion of the truck bed of the vehicle.

### Brief Description of the Drawings

FIG. 1 is a schematic front side view of a tailgate device in the extended state without the vehicle, according to a first embodiment of the present disclosure.
FIG. 2 is a schematic perspective view of the tailgate device of FIG. 1 in the folded state without the vehicle.
FIG. 3 is a schematic front side view of the tailgate device of FIG. 1 in the extended state with the vehicle.
FIG. 4 is a schematic front side view of a tailgate device in the extended state with the vehicle, according to a second embodiment of the present disclosure.
FIG. 5 is a schematic cross-sectional view of the tailgate device of FIG. 4 along line 5-5.
FIG. 6 is a schematic top plan view of the first and second openings in the tailgate device of FIG. 4.
FIG. 7A is a schematic front side view of a retention device from a tailgate device, according to a third embodiment of the present disclosure.
FIG. 7B is a schematic front side view of a retention device from a tailgate device, according to a fourth embodiment of the present disclosure.

### Detailed Description

The present disclosure will now be described more fully hereinafter with reference to the accompanying drawings, in which several embodiments of the invention are shown. This present disclosure may, however, be embodied in many different forms and should not be construed as limited to the embodiments set forth herein. Rather, these embodiments are provided so that this disclosure will be thorough and complete, and will fully convey the scope of the present disclosure to those skilled in the art. Like numbers refer to like elements throughout, and base 100 reference numerals are used to indicate similar elements in alternative embodiments.

Generally, a tailgate is disclosed that can be folded for storage and is sized to fit in a truck bed in place of an original tailgate when in use. The folding tailgate may be stored in the truck bed (e.g. below the truck's rear window) when the truck bed camper is loaded thereon. When the truck bed camper is unloaded and set-up, such as at a campsite, the folded tailgate can then be unfolded and positioned in the rear portion of the truck bed.

The tailgate according to the present invention easily stores in the truck bed with camper loaded and allows for light hauling during travels when the camper is off the truck bed.
The tailgate has quick and easy installation and removal. Furthermore, the tailgate may require no tools for installation and gives the truck an appearance of completeness.

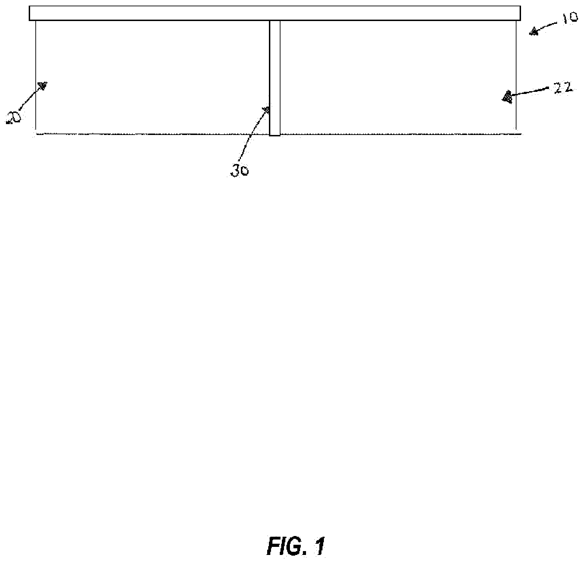

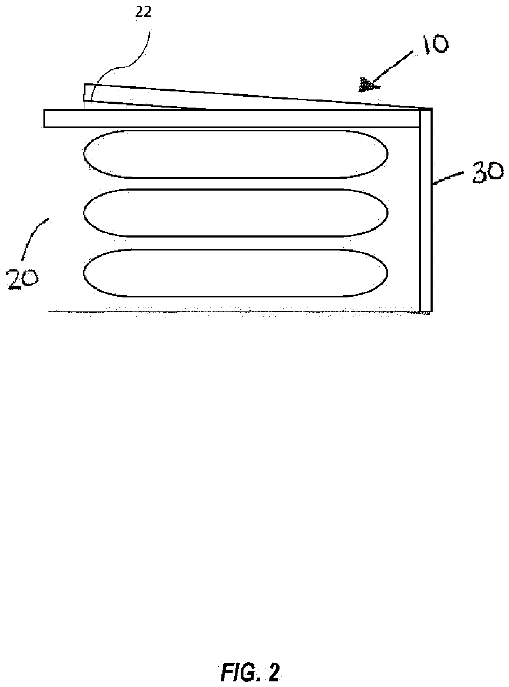

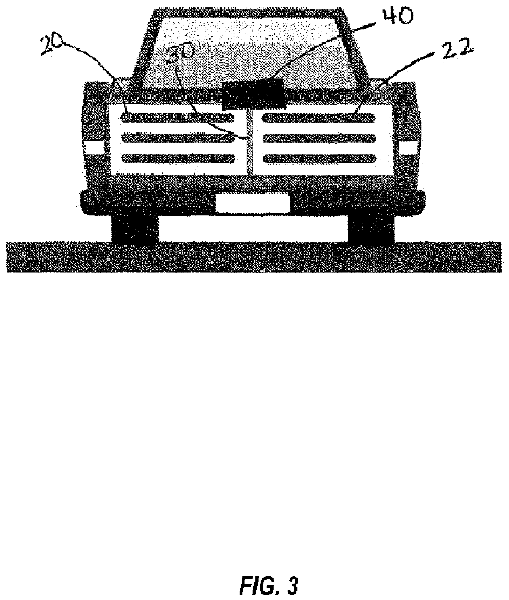

Referring initially to FIGS. 1-3, a foldable tailgate **10** according to the present disclosure is described. The foldable tailgate **10** illustratively comprises two portions **20** and **22,** connected together by a hinge **30** so the tailgate can be folded as shown in FIG. 2 or unfolded in a deployed configuration as shown in FIGS. 1 & 3. A brace **40** can be included at the hinge to prevent the tailgate from folding when necessary. Dowels can be located at the four corners of the tailgate to be accommodated in appropriate holes defined in the truck bed to secure the tailgate in position.

In one form of the tailgate, the tailgate panels are made of a strong, durable, lightweight, and waterproof substance. For example, a lightweight polymer is one possibility. Another embodiment of the tailgate can include a cargo net attached to the backside of each panel which will prevent smaller items falling out of the vents. Yet another form of the tailgate has the dowels being easy-release, springloaded stainless steel. Still, a further embodiment has the plywood brace replaced with the same material as the tailgate panels with a locking mechanism to prevent theft. The thickness of the folded tailgate should be less than the depth of the front bumpers on a truck bed camper, and the space between floor of truck bed and the bottom dowels of the tailgate should be at least 0.5 inches to accommodate different styles/thickness of rubber bed liners.

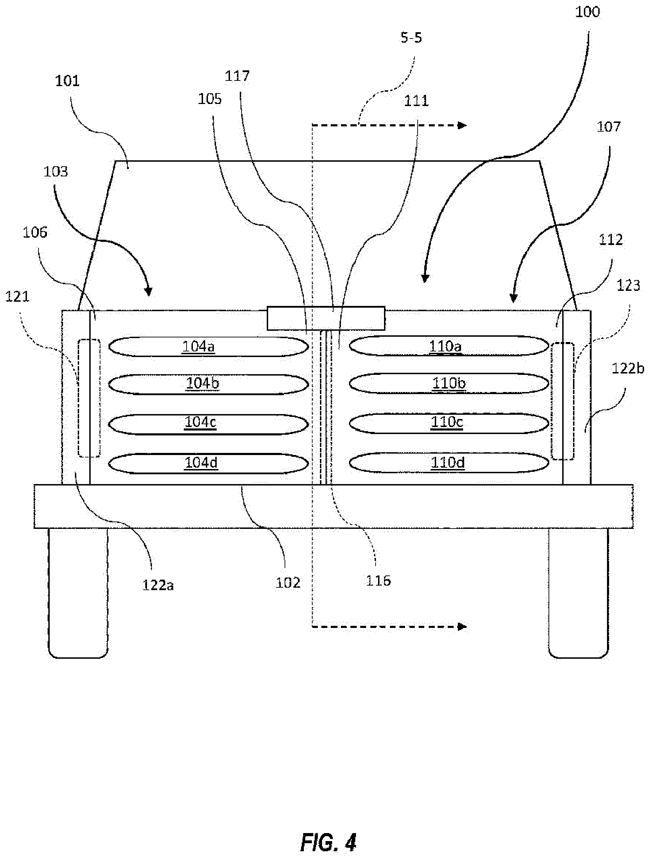

Referring now to FIGS. 4-6, a tailgate device **100** according to the present disclosure is now described. The tailgate device **100** is for a vehicle **101.** In particular, the tailgate device **100** is intended for a truck bed **102** of a pick-up truck style vehicle, for example, the illustrated embodiment. The tailgate device **100** may provide an approach to the above noted problems of existing tailgate devices. Helpfully, the tailgate device **100** may be quickly and readily installed into the truck bed **102** when the original tailgate has been removed for some applications, such as when hauling a truck bed camper.

The tailgate device **100** illustratively comprises a
first panel **103** defining a plurality of first openings **104a-104d** therein and having a first end **105** and a second end **106** opposite the first end. The tailgate device **100** illustratively comprises a second panel **107** defining a plurality of second openings **110a-110d** therein. The second panel **107** also illustratively includes a first end **111** and a second end **112** opposite the first end. In the illustrated embodiment, each of the first and second panels **103, 107** is rectangle-shaped.

Also, each of the plurality of first openings **104a-104d** illustratively comprises a longitudinal slot **113,** and each of the plurality of second openings **110a-110d** also illustratively includes a longitudinal slot **113.** In other embodiments, the plurality of first openings **104a-104d** and the plurality of second openings **110a-110d** may comprise different shapes, such as, for example, a rectangle-shaped slot. In yet other embodiments, the plurality of first openings **104a-104d** and the plurality of second openings **110a-110d** may comprise a two-dimensional array/grid of circle-shaped openings.

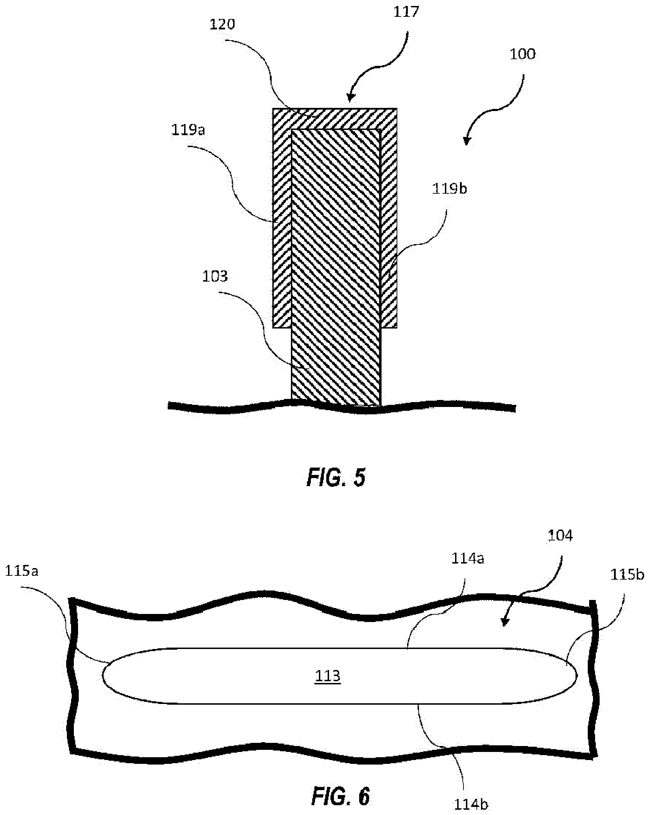

As perhaps best seen in FIG. 6, each longitudinal slot **113** illustratively includes parallel first and second sides **114a-114b,** and curved first and second ends **115a-115b** between the first and second sides. In some embodiments, the first and second sides **114a-114b** may be substantially parallel (i.e. ±10° of parallel) to one another. In some embodiments, the tailgate device **100** comprises first and second mesh nets respectively coupled to the inner faces of the first and second panels **103, 107** to prevent cargo from escaping the truck bed **102** through the plurality of first openings **104a-104d** and the plurality of second openings **110a-110d.**

For example, in some embodiments, each of the first and second panels **103, 107** may comprise a polymer plastic material. In other embodiments, each of the first and second panels **103, 107** may comprise a metallic material. Indeed, any material with sufficient rigidity may be used for the first and second panels **103, 107.**

The tailgate device **100** illustratively comprises a hinge **116** coupled between the first ends **105, 111** of the first and second panels **103, 107** and permitting the first and second panels/hinge to switch between an extended state (FIGS. 1 & 3-4) and a folded state (FIG. 2). The hinge **116** may comprise a biased hinge (e.g. spring loaded hinge) configured to bias the first and second panels **103, 107** in the extended state. The tailgate device **100** is installed in the truck bed **102** in the extended state, and is stored in the folded state.

The tailgate device **100** illustratively comprises a sleeve **117** receiving uppermost portions of the first ends **105, 111** of the first and second panels **103, 107** and aligned vertically with and over the hinge **116** to lock the hinge and the first and second panels in the extended state. In particular, as perhaps best seen in FIG. 5, the sleeve **117** illustratively includes first and second arms **119a-119b** extending vertically to directly abut the uppermost portions of the first ends **105, 111** of the first and second panels **103, 107,** and a medial portion **120** between the first and second arms and directly sitting on the uppermost portions of the first ends of the first and second panels. As will be appreciated, the sleeve **117** prevents the hinge **116** from switching out of the extended state. The sleeve **117** may comprise a rigid material, such as a metallic compound or a polymer plastic. Advantageously, the sleeve **117** may prevent unintended collapse of the tailgate devise **100** during use.

Although not shown, the sleeve **117** may comprise a retention feature for keeping the sleeve in place and keeping the tailgate device **100** in the extended state. In some embodiments, the inner surfaces of the sleeve **117** may comprise an over layer for providing non-slip surfaces. The over layer may comprise a rubber based material, or any tacky surface material. In other embodiments, the sleeve has a plurality of sleeve passageways for respectively receiving retention pins. The first ends **105, 111** of the first and second panels **103, 107** at their uppermost portions would have companion panel passageways aligned with the plurality of sleeve passageways in the sleeve **117,** and the retention pins would extend through the aligned sleeve and panel passageways in both the sleeve and the first and second panels **103, 107.**

In yet other embodiments, the retention feature may comprise a hook and loop interface, or an interlocking feature. For example, the sleeve **117** may comprise protrusions to be received by detents within the uppermost portions of the first and second panels **103, 107.** In yet other embodiments, distal ends of the first and second arms **119a-119b** of the sleeve **117** may latch into an uppermost first and second opening in the first and second panels **103, 107** with a cable. Further, the sleeve **117** may comprise a locking mechanism configured to lock the sleeve onto the first ends **105, 111** of the first and second panels **103, 107,** thereby helpfully preventing unauthorized removal of the tailgate device **100.**

The tailgate device **100** illustratively includes a first retention device **121** permanently coupled to the second end **106** of the first panel **103** and to be removably coupled to a first side portion **122a** of the truck bed **102** of the vehicle **101.** The tailgate device **100** illustratively includes a second retention device **123** permanently coupled to the second end **112** of the second panel **107** and to be removably coupled to a second side portion **122b** of the truck bed **102** of the vehicle **101.**

In other embodiments, each of the first and second retention devices **121, 123** may comprise a magnetic device configured to magnetically couple to the metallic portions of the first and second side portions **122a-122b** of the truck bed **102** of the vehicle **101.** In some embodiments, the magnetic devices may be integrally molded with the second ends **106, 112** of the first and second panels **103, 107.** The first and second retention devices **121, 123** securely couple the tailgate device **100** to the first and second side portions **122a-122b** of the truck bed **102** while in use in the extended state.

Another aspect is directed to a method for making a tailgate device **100** for a vehicle **101.** The method comprises forming a first panel **103** defining a plurality of first openings **104a-104d** therein and having first and second ends **105, 106,** and forming a second panel **107** defining a plurality of second openings **110a-110d** therein and having first and second ends **111, 112.** The method further includes coupling a hinge **116** between the first ends **105, 111** of the first and second panels **103, 107** and permitting the first and second panels to switch between an extended state and a folded state, and providing a sleeve **117** to receive uppermost portions of the first ends **105, 111** of the first and second panels **103, 107** and to be aligned with the hinge **116** to lock the first and second panels in the extended state. The method includes coupling a first retention device **121** to the second end **106** of the first panel **103** and to be coupled to a first side portion **122a** of a truck bed **102** of the vehicle **101,** and coupling a second retention device **123** to the second end **112** of the second panel **107** and to be coupled to a second side portion **122b** of the truck bed of the vehicle.

Advantageously, the tailgate device is securely coupled to the first and second side portions **122a-122b** of the truck bed **102** of the vehicle **101.** While in use, the user may use the truck bed **102** for light utility hauling, providing more flexibility for applications that demand removal of the original tailgate.

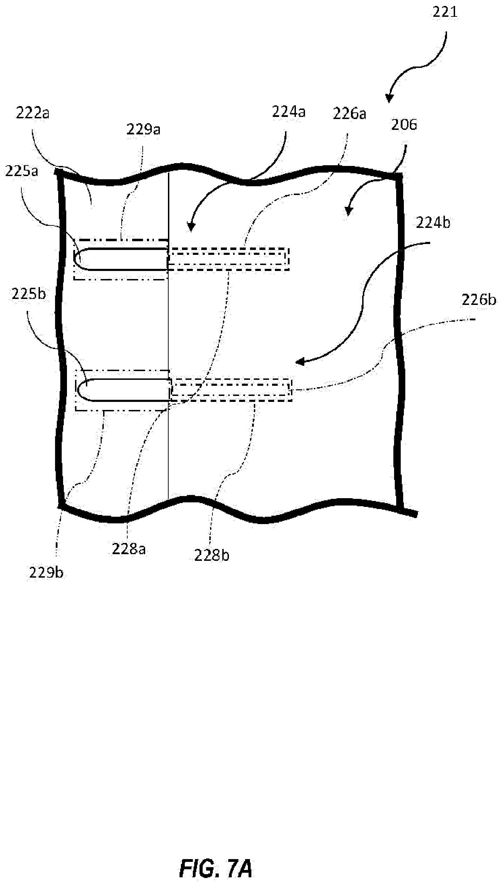

Referring now additionally to FIG. 7A, another embodiment of the first retention device **221** is now described. In this embodiment of the first retention device **221,** those elements already discussed above with respect to FIGS. 3-6 are incremented by 100 and most require no further discussion herein. This embodiment differs from the previous embodiment in that this first retention device **221** illustratively includes a plurality of dowels **224a-224b** to be received by first and second truck bed recesses **229a-229b** of the first and second side portions **222a-222b** of the truck bed of the vehicle **201.** Each dowel **224a-224b** illustratively comprises an elongate member **225a-225b** configured to extend outward and away from the second ends **206, 212** of the first and second panels **203, 207** and retract inward, and an elastic member **226a-226b** (e.g. coil springs) coupled to the elongate member and to bias the elongate member to extend outward. The second ends **206, 212** of the first and second panels **203** illustratively includes a plurality of panel recesses **228a-228b** for carrying the elastic member **226a-226b** and receiving the elongate member **225a-225b** when retracted therein. Each of the plurality of dowels **224a-224b** may comprise a metallic material in some embodiments.

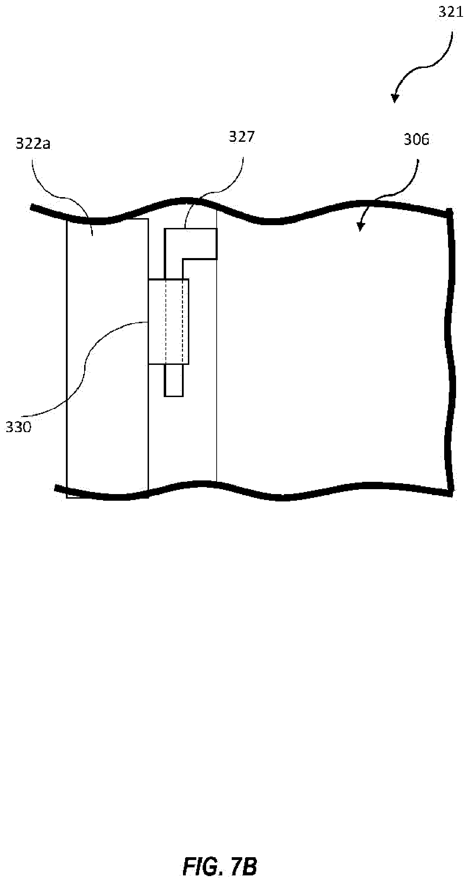

Referring now additionally to FIG. 7B, another embodiment of the first retention device **321** is now described. In this embodiment of the first retention device **321,** those elements already discussed above with respect to FIGS. 3-6 are incremented by 200 and most require no further discussion herein. This embodiment differs from the previous embodiment in that this first retention device **321** illustratively includes a retention arm **327** extending vertically, and a slot **330** coupled to the first and second side portions **322a-322b** of the truck bed of the vehicle **301,** the retention arm to be slidingly engaged with the slot when in the extended state.

It should be appreciated that the second retention device **123** would mirror the construction of the first retention device **121** in the embodiments of FIGS. 7A-7B. Also, as will be appreciated by the skilled person, some or all of the features of the different embodiments of the tailgate device **100** disclosed may be combined with one another.

Many modifications and other embodiments of the present disclosure will come to the mind of one skilled in the art having the benefit of the teachings presented in the foregoing descriptions and the associated drawings. Therefore, it is understood that the present disclosure is not to be limited to the specific embodiments disclosed, and that modifications and embodiments are intended to be included within the scope of the appended claims.

## Claims

1. A tailgate device for a vehicle, the tailgate device comprising:
a first panel defining a plurality of first openings therein and having first and second ends;
a second panel defining a plurality of second openings therein and having first and second ends;
a hinge coupled between the first ends of the first and second panels and permitting the first and second panels to switch between an extended state and a folded state;
a sleeve receiving uppermost portions of the first ends of the first and second panels and aligned with the hinge to lock the first and second panels in the extended state;
a first retention device coupled to the second end of the first panel and to be coupled to a first side portion of a truck bed of the vehicle; and
a second retention device coupled to the second end of the second panel and to be coupled to a second side portion of the truck bed of the vehicle.

2. The tailgate device of claim 1 wherein the sleeve comprises first and second arms extending vertically to abut the first ends of the first and second panels, and a medial portion between the first and second arms and on the uppermost portions of the first ends of the first and second panels.

3. The tailgate device of claim 1 wherein each of the first and second retention devices comprises a plurality of dowels to be received by the first and second side portions of the truck bed of the vehicle.

4. The tailgate device of claim 3 wherein each dowel comprises an elongate member configured to extend outward and away from the second ends of the first and second panels and retract inward, and an elastic member coupled to the elongate member and to bias the elongate member to extend outward.

5. The tailgate device of claim 1 wherein each of the first and second retention devices comprises a magnetic device configured to magnetically couple to the first and second side portions of the truck bed of the vehicle.

6. The tailgate device of claim 1 wherein each of the first and second retention devices comprises a retention arm extending vertically, and a slot coupled to the first and second side portions of the truck bed of the vehicle, the retention arm to be slidingly engaged with the slot when in the extended state.

7. The tailgate device of claim 1 wherein each of the plurality of first openings comprises a longitudinal slot; and wherein each of the plurality of second openings comprises a longitudinal slot.

8. The tailgate device of claim 7 wherein each longitudinal slot comprises parallel first and second sides, and curved first and second ends between the first and second sides.

9. The tailgate device of claim 1 wherein each of the first and second panels comprises a polymer plastic material.

10. A method for making a tailgate device for a vehicle, the method comprising:
forming a first panel defining a plurality of first openings therein and having first and second ends;
forming a second panel defining a plurality of second openings therein and having first and second ends;
coupling a hinge between the first ends of the first and second panels and permitting the first and second panels to switch between an extended state and a folded state;
providing a sleeve to receive uppermost portions of the first ends of the first and second panels and to be aligned with the hinge to lock the first and second panels in the extended state;
coupling a first retention device to the second end of the first panel and to be coupled to a first side portion of a truck bed of the vehicle; and
coupling a second retention device to the second end of the second panel and to be coupled to a second side portion of the truck bed of the vehicle.

11. The method of claim 10 wherein the sleeve comprises first and second arms extending vertically to abut the first ends of the first and second panels, and a medial portion between the first and second arms and on the uppermost portions of the first ends of the first and second panels.

12. The method of claim 10 wherein each of the first and second retention devices comprises a plurality of dowels to be received by the first and second side portions of the truck bed of the vehicle; wherein each dowel comprises an elongate member configured to extend outward and away from the second ends of the first and second panels and retract inward, and an elastic member coupled to the elongate member and to bias the elongate member to extend outward.

13. The method of claim 10 wherein each of the first and second retention devices comprises a magnetic device configured to magnetically couple to the first and second side portions of the truck bed of the vehicle.

14. The method of claim 10 wherein each of the first and second retention devices comprises a retention arm extending vertically, and a slot coupled to the first and second side portions of the truck bed of the vehicle, the retention arm to be slidingly engaged with the slot when in the extended state.

15. The method of claim 10 wherein each of the plurality of first openings comprises a longitudinal slot; and wherein each of the plurality of second openings comprises a longitudinal slot.
